# EUROPEAN PATENT APPLICATION

(11) **EP 4 478 568 A1**
(43) Date of publication of application: **18.12.2024**
(21) Application number: 24174752.6
(22) Date of filing: 08.05.2024
(51) Int. Cl.: H02H 9/04

(54) **WIRELESS REMOTE MONITORING OF SURGE PROTECTIVE DEVICES**

(30) Priority: 24.05.2023 DE 202023102859 U
(71) Applicant: Raycap IP Development LTD, 2012 Strovolos Nicosia (CY)
(72) Inventor: PREGELJ, Zan, 1275 Smartno pri Litiji (SI); BAJT, Kristof, 1000 Ljubljana (SI); ISTENIC, Benjamin Walter, 1370 Logatec (SI); KAMENSEK, Sebastjan, 4220 kofja Loka (SI)
(74) Representative: HL Kempner Patentanwälte, Solicitors (England and Wales), Irish Patent Agents Partnerschaft mbB

(57) **Abstract**

A device includes a wireless transmitter; a controller; and a remote control switch connector that is configured to connect the controller and the wireless transmitter to a power source for a transmit period responsive to a transition of a switch in a surge protective device indicating an end-of-life state of the surge protective device, the controller being configured to communicate an alarm code to a destination via the wireless transmitter during the transmit period.

## Description

### Field of the Invention

The present invention relates to surge protective devices and, more particularly, to monitoring the status and/or performance of surge protective devices.

### Background of the Invention

Frequently, excessive voltage or current is applied across service lines that deliver power to residences and commercial and institutional facilities. Such excess voltage or current spikes (transient overvoltages and surge currents) may result from lightning strikes, for example. The above events may be of particular concern in telecommunications distribution centers, hospitals and other facilities where equipment damage caused by overvoltages and/or current surges is not acceptable and resulting down time may be very costly.

Typically, sensitive electronic equipment may be protected against transient overvoltages and surge currents using surge protective devices (SPDs). For example, an overvoltage protection device may be installed at a power input of equipment to be protected, which is typically protected against overcurrents when it fails. Typical failure mode of an SPD is a short circuit. The overcurrent protection typically employed is a combination of an internal thermal disconnector to protect the device from overheating due to increased leakage currents and an external fuse to protect the device from higher fault currents. Different SPD technologies may avoid the use of the internal thermal disconnector because, in the event of failure, they change their operation mode to a low ohmic resistance.

In the event of a surge current in a line L (e.g., a voltage line of a three phase electrical power circuit), protection of power system load devices may necessitate providing a current path to ground for the excess current of the surge current. The surge current may generate a transient overvoltage between the line L and the neutral line N (the neutral line N may be conductively coupled to a protective earth ground PE). Because the transient overvoltage significantly exceeds the operating voltage of the SPD, the SPD may become conductive, allowing the excess current to flow from line L through the SPD to the neutral line N. Once the surge current has been conducted to the neutral line N, the overvoltage condition ends and the SPD may become non-conducting again.

SPDs are typically connected in parallel in an installation and overvoltage/surge current events may not always be noticed by personnel responsible for managing a facility. In addition, an SPD is generally not self-aware and does not provide a direct or automated way to communicate its status or operational state. Thus, when multiple SPDs are distributed in multiple locations throughout an installation, which may have different protection requirements, they may not include an automated capability of communicating information concerning their status to other SPDs and/or to the personnel responsible for managing the facility. To evaluate the status of an SPD, maintenance personnel typically use an external device to test one or more components of the SPD using physical wires or connectors. In some examples, multiple such external devices may be used to evaluate different components of the SPD. It may, therefore, be difficult for management personnel of a facility to obtain an overview of the status of various SPDs deployed throughout a facility to assess the overall level of risk as well as the risks to particular areas throughout the facility.

### Summary

According to some embodiments of the inventive concept, a device comprises a wireless transmitter; a controller; and a remote control switch connector that is configured to connect the controller and the wireless transmitter to a power source for a transmit period responsive to a transition of a switch in a surge protective device indicating an end-of-life state of the surge protective device, the controller being configured to communicate an alarm code to a destination via the wireless transmitter during the transmit period.

In other embodiments, the wireless transmitter is configured to communicate the alarm code to the destination via a wireless communication protocol.

In still other embodiments, the wireless communication protocol comprises a Lower Power Device 433 (LPD433) radio communication protocol, a cellular communication protocol, a Wi-Fi communication protocol, a Zigbee protocol, a Bluetooth communication protocol, and/or a Near Field Communication (NFC) communication protocol.

In still other embodiments, the remote control switch connector is configured to disconnect the transmitter and the controller from the power source at an end of the transmit period.

In still other embodiments, the power source is a battery.

In still other embodiments, the device further comprises: a test switch that is configured to connect the controller and wireless transmitter to the power source responsive to operation of the test switch. The controller is further configured to perform a status check of the power source responsive to being connected to the power source due to operation of the test switch.

In still other embodiments, the controller is further configured to communicate the status of the power source to the destination via the wireless transmitter responsive to performing the status check of the power source.

In still other embodiments, the power source is a battery; the controller is further configured to communicate a battery OK code responsive to a determination that the battery has a voltage above a threshold level during the status check of the power source; and the controller is further configured to communicate a battery not OK code responsive to a determination that the battery has a voltage less than or equal to the threshold level during the status check of the power source.

In still other embodiments, the device further comprises: a visual indicator that is configured to light responsive to operation of the test switch.

In still other embodiments, the visual indicator is a light emitting diode.

In still other embodiments, the test switch is further configured for manual operation thereof.

In still other embodiments, the device further comprises: a housing that encloses the wireless transmitter and the controller and is configured to connect to an assembly including the surge protective device.

In some embodiments of the inventive concept, a device comprises: a wireless receiver configured to receive an alarm code from a wireless transmitter indicating transition of a surge protective device to an end-of-life state; and a controller connected to the wireless receiver and that is configured to activate an alarm circuit responsive to receipt of the alarm code via the wireless receiver.

In further embodiments, the alarm circuit is an audible alarm circuit and/or a visual alarm circuit.

In still further embodiments, the device further comprises a remote control switch; and a remote control connector connected to the remote control switch. The controller is configured to communicate an alarm notification to an external entity via the remote control switch and remote control connector responsive to wireless receiver receiving the alarm code.

In still further embodiments, the wireless receiver is further configured to receive a status of a power source connected to the wireless transmitter; and the controller is configured to activate the alarm circuit and/or to generate the alarm notification to indicate the status of the power source.

In still further embodiments, the power source is a battery; the wireless receiver is further configured to receive a battery OK code as the status of the power source when the battery has a voltage above a threshold level; and the wireless receiver is further configured to receive a battery not OK code as the status of the power source when the battery has a voltage less than or equal to the threshold level.

In still further embodiments, the controller is configured to activate the alarm circuit and/or generate the alarm notification to indicate a normal operation state responsive to receiving the battery OK code and is configured to activate the alarm circuit and/or generate the alarm notification to indicate an error state responsive to receiving the battery not OK code.

In still further embodiments, the device further comprises: a reset switch that is configured to reset the alarm circuit and/or the alarm notification responsive to operation thereof.

In still further embodiments, the wireless receiver is configured to communicate with the wireless transmitter via a wireless communication protocol.

In still further embodiments, the wireless communication protocol comprises a Lower Power Device 433 (LPD433) radio communication protocol, a cellular communication protocol, a Wi-Fi communication protocol, a Zigbee protocol, a Bluetooth communication protocol, and/or a Near Field Communication (NFC) communication protocol.

In still further embodiments, the wireless receiver is further configured to receive a plurality of alarm codes from a plurality of wireless transmitters indicating transitions of a plurality of surge protective devices to end-of-life states, respectively.

In some embodiments of the inventive concept, a device comprises: a wireless transmitter; a controller; and a remote control switch connector that is configured to connect the controller and the wireless transmitter to a power source for a transmit period responsive to a transition of a switch in a surge protective device indicating a surge event, the controller being configured to communicate an alarm code to a destination via the wireless transmitter during the transmit period.

### Brief Description of the Drawings

The accompanying drawings, which form a part of the specification, illustrate embodiments of the present invention.
FIG. 1 is a block diagram that illustrates wireless remote monitoring of surge protective devices according to some embodiments of the inventive concept;
FIG. 2 is a perspective diagram of a surge protective device (SPD) including a transmitting device configured to wireless communicate an alarm code for surge events according to some embodiments of the inventive concept;
FIG. 3 is a perspective diagram of the transmitting device of FIG. 2 according to some embodiments of the inventive concept;
FIG. 4 is a block diagram of the transmitting device of FIGS. 2 and 3 according to some embodiments of the inventive concept;
FIG. 5 is a block diagram of a receiving device configured to wirelessly receive alarm codes for surge events from the transmitting devices of FIGS. 2-4 according to some embodiments of the inventive concept;
FIG. 6 is a block diagram of a hardware/software architecture for use in a transmitting device according to some embodiments of the inventive concept; and
FIG. 7 is a block diagram of a hardware/software architecture for use in a receiving device according to some embodiments of the inventive concept.

### Detailed Description of Embodiments of the Invention

The present invention now will be described more fully hereinafter with reference to the accompanying drawings, in which illustrative embodiments of the invention are shown. In the drawings, the relative sizes of regions or features may be exaggerated for clarity. This invention may, however, be embodied in many different forms and should not be construed as limited to the embodiments set forth herein; rather, these embodiments are provided so that this disclosure will be thorough and complete, and will fully convey the scope of the invention to those skilled in the art. It is noted that aspects described with respect to one embodiment may be incorporated in different embodiments although not specifically described relative thereto. That is, all embodiments and/or features of any embodiments can be combined in any way and/or combination

As used herein, the term a data processing system may include, but it is not limited to, a hardware element, firmware component, and/or software component.

Some embodiments of the inventive concept stem from a realization that typically surge protective devices (SPDs) provide only a lower level, local protection to installations where they are deployed. Power network stress events, however, such as overvoltages, current surges, and the like may affect broader areas of an installation. It has typically been difficult to obtain SPD status information, which can be used to evaluate the health of the SPD(s), predict a lifespan of an SPD, assess the vulnerability of an installation over a broader geographic area, and/or provide a basis for a statistical analysis of stress events. Some embodiments of the inventive concept may provide both a transmitting device that may be associated with or coupled to an SPD assembly and may wirelessly transmit the status of an SPD, such as whether the SPD has transitioned to an end-of-life state due to, for example, a thermal disconnect in response to a surge event, to a receiving device located apart from the SPD. For example, the receiving device may be located near a control or monitoring center for managing an installation of equipment that is protected by one or more SPDs. In some embodiments, the transmitting device may include a remote control switch connector that is configured to connect a wireless transmitter and a controller in the transmitting device to a power source, such as a battery, responsive to a transition of a switch, such as a remote control switch, in an SPD indicating the SPD has transitioned to an end-of-life state and/or that it has operated in response to a surge event. This may allow the transmitting device to be disconnected from the power source when it is operating in a standby mode and only consume power in response to a transition to a transition of an SPD to an end-of-life state and/or operation of an SPD in response to a surge event. In some embodiments, the status of the SPD is communicated by the wireless transmitter in the transmitting device by transmitting an alarm code to the receiving device using a wireless communication protocol, such as the Lower Power Device 433 (LPD433) protocol. The receiving device may be equipped with a wireless receiver configured to receive the alarm code and a controller that may be configured to activate an alarm circuit in response to receipt of the alarm code via the wireless receiver. The alarm circuit may include an audible alarm circuit and/or a visual alarm circuit to notify an operator of an installation, for example, that an SPD has transitioned to an end-of-life state in response to a surge event. The receiving device may include a remote control switch and a remote control connector connected to the remote control switch that may be used to communicate an alarm notification to an external entity, such as some type of computing device, e.g., smartphone, laptop, tablet, or the like. The transmitting device may further include a test switch that may couple the controller to the power source, e.g.,, battery, to perform a status check. In some embodiments, the status check may be a determination of whether the battery has a voltage above a threshold level. The wireless transmitter may then communicate the battery status, e.g., battery OK or not OK, to the receiving device, which can then communicate the battery status via the audible and/or visual alarm circuit or via a notification to an external entity via the remote control switch and remote control connector. The receiving device may be used to receive surge event alarm codes and/or transmitting device battery status updates from multiple transmitting devices in a many to one arrangement. Thus, the transmitting device(s) and receiving device according to some embodiments may be used to track the status of multiple SPDs as part of an SPD management system in an installation.

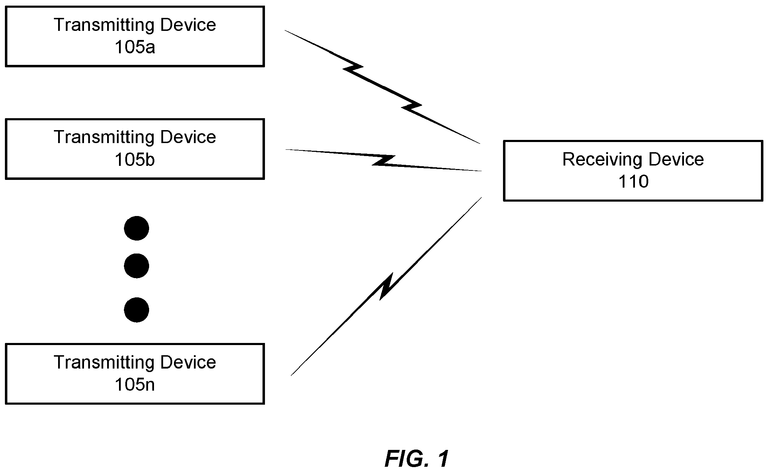

FIG. 1 is a block diagram that illustrates wireless remote monitoring of surge protective devices according to some embodiments of the inventive concept. As shown in FIG. 1, multiple transmitting devices 105a, 105b,...105n may be associated with multiple SPDs, respectively, and may each be configured to wirelessly transmit an alarm code that is indicative of an associated SPD transitioning to an end-of-life state and/or operation of the associated SPD in response to a surge event to a receiving device 110, which is located remote from the transmitting devices 105a, 105b,...105n. The receiving device 110 may, for example, be located near a control or monitoring center for managing an installation of equipment that is protected by the one or more SPDs respectively associated with the transmitting devices 105a, 105b,...105n.

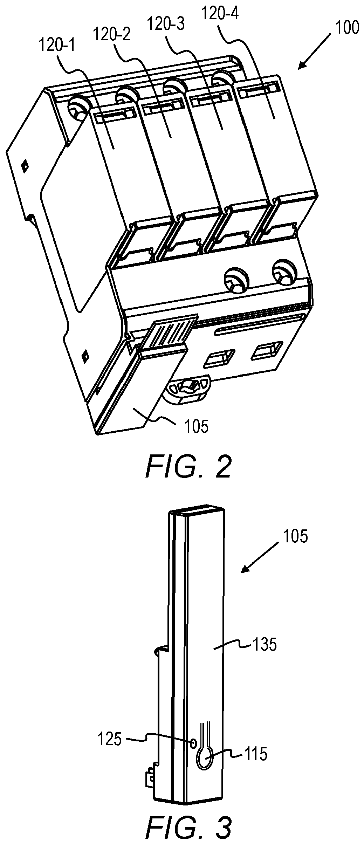

FIG. 2 is a perspective diagram of an SPD 100 including a transmitting device configured to wireless communicate an alarm code for surge events according to some embodiments of the inventive concept. As shown in FIG. 2, the SPD 100 includes one or overvoltage protection circuits 120-1, 120-2, 120-3 and 120-4 along with the transmitting device 105, which is attached thereto. Each of the overvoltage protection circuits 120-1, 120-2, 120-3 and 120-4 may include one or more varistors and/or one or more gas discharge tubes (GDTs). The overvoltage protection circuits 120-1, 120-2, 120-3 and 120-4 may be configured, for example, to provide a path to ground to divert excess current and high potential away from one or more protected devices in response to a surge event, such as a lightning strike. The transmitting device 105 may have a housing that is configured to facilitate an attachment to the SPD 100 to be communicatively coupled thereto.

FIG. 3 is a perspective diagram of the transmitting device 105 of FIG. 2 according to some embodiments of the inventive concept. Referring to FIG. 3, the transmitting device 105 includes a housing 135 that contains therein the various circuit elements and modules that are configured to provide at least some of the functionality of the transmitting device 105. The housing includes a test switch button 115 that is configured to provide an interface for manual operation of a test switch to determine whether a power supply, such as a battery, is in a normal operating state, e.g., can provide a sufficient voltage, or is in an error state and may need replacement. A visual indicator 125, such as a light emitting diode (LED) may indicate when the test switch button 115 has been engaged.

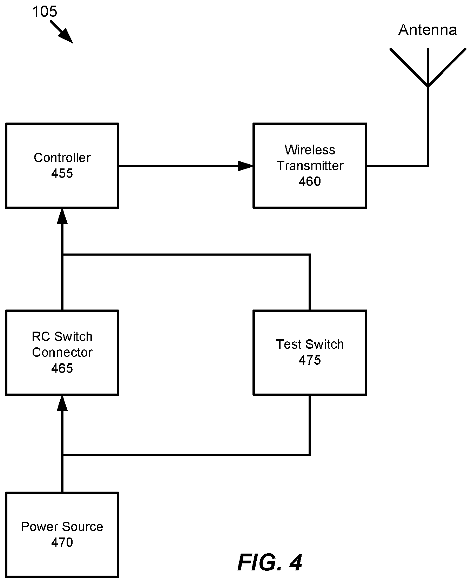

FIG. 4 is a block diagram of the transmitting device 105 of FIGS. 2 and 3 according to some embodiments of the inventive concept. Referring to FIG. 4, the transmitting device 105 includes a controller 455, a remote control (RC) switch connector 465, and a wireless transmitter 460. The RC switch connector 465 may be configured to connect the wireless transmitter 460 and the controller 455 to a power source 470, such as a battery, responsive to a transition of a switch, such as a remote control switch, in an SPD indicating the SPD has transitioned to an end-of-life state and/or that it has operated in response to a surge event. This may allow the components of the transmitting device 105 to be disconnected from the power source 470 when it is operating in a standby mode and only consume power in response to the SPD transitioning to an end-of-life state and/or operating in response to a surge event that triggers the SPD. When the controller 455 and wireless transmitter 460 are coupled to the power source during a transmit period, the wireless transmitter 460 under the control of the controller 455 communicates the status of the SPD by transmitting an alarm code to the receiving device 110 using a wireless communication protocol. In some embodiments, the wireless communication protocol comprises a Lower Power Device 433 (LPD433) radio communication protocol, a cellular communication protocol, a Wi-Fi communication protocol, a Zigbee protocol, a Bluetooth communication protocol, and/or a Near Field Communication (NFC) communication protocol. The RC switch connector 465 may be coupled to the SPD such that when a switch therein, such as an RC switch, transitions states in response to the SPD transitioning to an end-of-life state and/or a surge event, the transition of the switch in the SPD couples the controller 455 to the power source 470 in the transmitting device 105. In some embodiments, the surge event may be sufficiently temporary and/or sufficiently lower power that the SPD remains useful upon termination of the surge event. In some embodiments, the surge event may be sufficiently lengthy and/or at a sufficiently high power that the SPD transitions to an end-of-life state, such as a thermal disconnection resulting from a build-up of heat due to the high current running through the SPD. In this case, the transmitted alarm code may serve as a notification that the SPD needs to be repaired or replaced. In accordance with different embodiments of the inventive concept, the controller 455 and wireless transmitter 460 may be coupled to the power source 470 for a transmit period for communicating the alarm code to the receiving device 110 that terminates upon receipt of a surge event termination signal from the SPD, such as the switch in the SPD to which the RC switch connector 465 is connected changing states, or a programmed duration managed by the controller 455.

The transmitting device 105 may further include a test switch 475 that may be manually operated by the test switch button 115 and may be used to couple the controller 455 to the power source 470, e.g.,, battery, to perform a status check of the power source 470 by bypassing the RC switch connector 465. In some embodiments, the status check may be a determination of whether the battery has a voltage above a threshold level that is deemed sufficient to power the transmitting device 105. The wireless transmitter 460 under the supervision of the controller 455 may communicate the battery status, e.g., battery OK or not OK, to the receiving device 110 for generating an alert when the battery in the transmitting device 105 needs replacing.

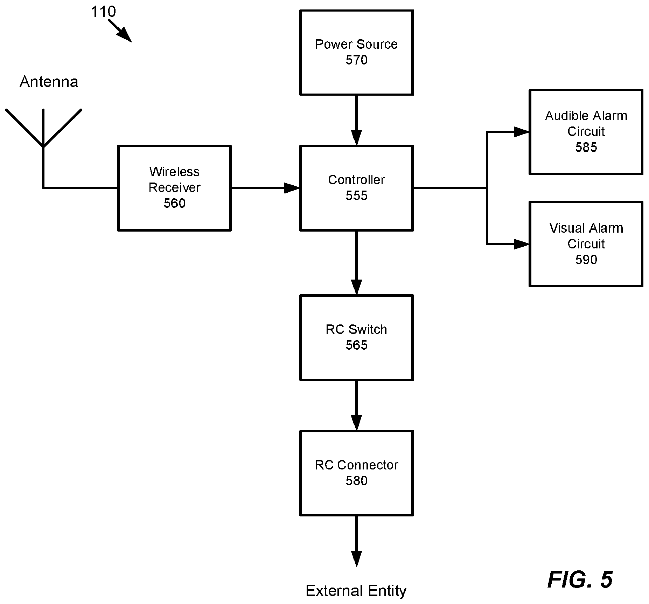

FIG. 5 is a block diagram of a receiving device 110 configured to wirelessly receive alarm codes for SPD end-of-life events and/or surge events from the transmitting devices of FIGS. 2-4 according to some embodiments of the inventive concept. Referring to FIG. 5, the receiving device 110 includes a wireless receiver 560. A power source 570, a controller 555, an RC switch 565, and an RC connector 580 that are configured as shown. The wireless receiver 560 may be configured to receive the alarm code from the transmitting device 105 and the controller 555 may be configured to activate an alarm circuit in response to receipt of the alarm code via the wireless receiver 560. As shown in FIG. 5, the receiving device 110 may include one or more alarm circuits including, for example, an audible alarm circuit 585, such as a tone or buzzer generator, and a visual alarm circuit 590, such as an LED. One or both of the audible alarm circuit 585 and the visual alarm circuit 590 may be used to alert an operator of supervisor of an installation that an SPD end-of-life and/or surge event has occurred and one or more SPDs have reached their end-of-life states and/or have been triggered in response thereto. In addition to end-of-life or surge event alarm codes, the receiving device may be configured to receive power source status messages, such as battery status messages from the transmitting devices 105. The controller 555 may be configured to decode these power source or battery status messages, such as a battery OK code when the battery has a voltage above a threshold level and a battery not OK code when the battery has a voltage less than or equal to the threshold level, and may activate one or both of the audible alarm circuit 585 and the visual alarm circuit 590 in response to a battery not OK code or other message indicating a bad power source. To distinguish between the power source status checks of the transmitting devices 105 and SPD end-of-life and/or surge events, the controller may generate different audible or visual patterns using the audible alarm circuit 585 and/or visual alarm circuit 590 for a power supply problem versus an end-of-life and/or surge event.

As shown in FIG. 5, the receiving device further includes an RC switch 565, which is wirelessly coupled to the controller and an RC connector 580 that can be used to communicate notifications to an external entity, such as some type of computing device, e.g., smartphone, laptop, tablet, or the like, communicatively coupled to the RC connector 580. The controller 55 and RC switch 565 may use a wireless protocol to communicate such as, for example, a Wi-Fi communication protocol, a Bluetooth communication protocol, and/or a Near Field Communication (NFC) communication protocol. The alerts and notifications may include SPD end-of-life and/or surge event alerts based on receipt of an end-of-life and/or surge event alarm code from a transmitting device 105 and/or power source status updates.

In some embodiments, the receiving device 110 may include a manually operated reset switch that can be used to turn off the audible alarm circuit 585, the visual alarm circuit 590, and/or the notification function to an external entity by way of the RC switch 565 and RC connector 580.

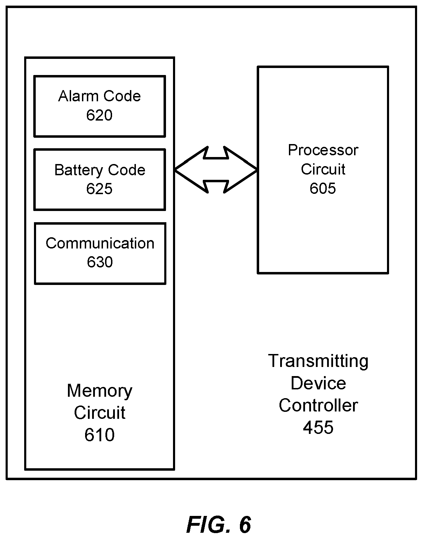

FIG. 6 is a block diagram of a data processing system hardware/software architecture for use in a transmitting device 105 according to some embodiments of the inventive concept. The transmitting device controller 455 comprises a processor circuit 605 and a memory circuit 610. The processor circuit 605 may comprise one or more data processing circuits, such as a general purpose and/or special purpose processor, e.g., microprocessor and/or digital signal processor. The processor circuit 605 is configured to execute computer readable program code including an alarm code module 620, a battery code module 625, a switch management module 630, and a communication module 635. The alarm code module 620 may be configured to generate an alarm code indicative of an SPD end-of-life and/or surge event responsive to a transition of a switch in an SPD indicating the SPD has transitioned to an end-of-life state and/or that it has operated in response to a surge event. The alarm code module 620 may be further configured to operate the wireless transmitter 460 to wirelessly communicate the alarm code to a receiving device 110. The battery code module 625 may be configured to generate a power source status message responsive to invocation of the test switch 475 and to operate the wireless transmitter 460 to wirelessly communicate the power source status message to a receiving device 110. The communication module 630 may be configured to implement one or more wireless communication protocols for communicating with the receiving device 110 and/or for communicating with an associated SPD. The one or more wireless communication protocols may include, but are not limited to, a LPD433 radio communication protocol, a cellular communication protocol, a Wi-Fi communication protocol, a Zigbee protocol, a Bluetooth communication protocol, and/or an NFC communication protocol.

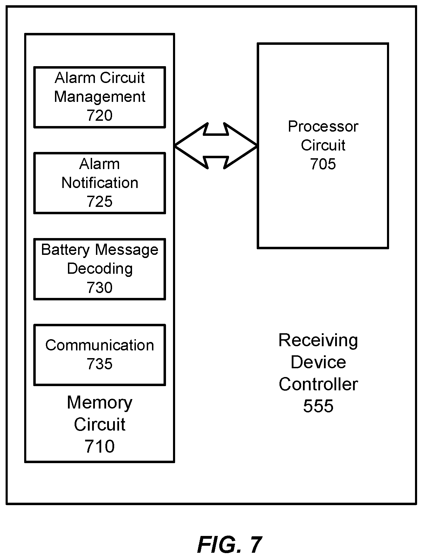

FIG. 7 is a block diagram of a data processing system hardware/software architecture for use in a receiving device 110 according to some embodiments of the inventive concept. The receiving device controller 555 comprises a processor circuit 705 and a memory circuit 710. The processor circuit 705 may comprise one or more data processing circuits, such as a general purpose and/or special purpose processor, e.g., microprocessor and/or digital signal processor. The processor circuit 705 is configured to execute computer readable program code including an alarm circuit management module 720, an alarm notification module 725, a battery message decoding module 730, and a communication module 735. The alarm circuit management module 720 may be configured to manage operation of the audible alarm circuit 585 and the visual alarm circuit 590 in response to SPD end-of-life and/or surge event alarm codes and/or power source status updates from a transmitting device 105. The alarm notification module 725 may be configured to communicate SPD end-of-life and/or surge event alarm codes and/or power source status updates from a transmitting device 105 to an external entity by way of the RC switch 565 and RC connector 580. The battery message decoding module 730 may be configured to decode one or more status messages related to a power source in a transmitting device 105, such as a battery OK code and/or a battery not OK code, which may be received based on whether a battery in a transmitting device 105 can output a voltage greater than a threshold. The communication module 735 may be configured to implement one or more wireless communication protocols for communicating with the transmitting device 110 and/or for communicating with an external entity by way of the RC switch 565 and RC connector 580. The one or more wireless communication protocols may include, but are not limited to, a LPD433 radio communication protocol, a cellular communication protocol, a Wi-Fi communication protocol, a Zigbee protocol, a Bluetooth communication protocol, and/or an NFC communication protocol.

Thus, some embodiments of the inventive concept may provide a wireless SPD monitoring system including a transmitting device that may be coupled to an SPD assembly and a receiving device that may be located apart from the transmitting device. The transmitting device and receiving device may use wireless communication to communicate operation of an SPD in response to a surge event, such as the SPD transitioning to an end-of-life state, and also communicate status of the power supply in the transmitting device. To reduce battery drain, operational components of the transmitting device may be disconnected from a battery until the SPD transitions to an end-of-life state and/or a surge event occurs and/or a manual status check of the battery is requested. The extensive use of wireless technology may allow the wireless SPD monitoring system to be installed faster and with less complication.

In the above-description of various embodiments of the present disclosure, aspects of the present disclosure may be illustrated and described herein in any of a number of patentable classes or contexts including any new and useful process, machine, manufacture, or composition of matter, or any new and useful improvement thereof. Accordingly, aspects of the present disclosure may be implemented entirely hardware, entirely software (including firmware, resident software, micro-code, etc.) or combining software and hardware implementation that may all generally be referred to herein as a "circuit," "module," "component," or "system." Furthermore, aspects of the present disclosure may take the form of a computer program product comprising one or more computer readable media having computer readable program code embodied thereon.

Any combination of one or more computer readable media may be used. The computer readable media may be a computer readable signal medium or a computer readable storage medium. A computer readable storage medium may be, for example, but not limited to, an electronic, magnetic, optical, electromagnetic, or semiconductor system, apparatus, or device, or any suitable combination of the foregoing. More specific examples (a non-exhaustive list) of the computer readable storage medium would include the following: a portable computer diskette, a hard disk, a random access memory (RAM), a read-only memory (ROM), an erasable programmable read-only memory (EPROM or Flash memory), an appropriate optical fiber with a repeater, a portable compact disc read-only memory (CD-ROM), an optical storage device, a magnetic storage device, or any suitable combination of the foregoing. In the context of this document, a computer readable storage medium may be any tangible medium that can contain, or store a program for use by or in connection with an instruction execution system, apparatus, or device.

A computer readable signal medium may include a propagated data signal with computer readable program code embodied therein, for example, in baseband or as part of a carrier wave. Such a propagated signal may take any of a variety of forms, including, but not limited to, electro-magnetic, optical, or any suitable combination thereof. A computer readable signal medium may be any computer readable medium that is not a computer readable storage medium and that can communicate, propagate, or transport a program for use by or in connection with an instruction execution system, apparatus, or device. Program code embodied on a computer readable signal medium may be transmitted using any appropriate medium, including but not limited to wireless, wireline, optical fiber cable, RF, etc., or any suitable combination of the foregoing.

Computer program code for carrying out operations for aspects of the present disclosure may be written in any combination of one or more programming languages, including an object oriented programming language such as Java, Scala, Smalltalk, Eiffel, JADE, Emerald, C++, C#, VB.NET, Python or the like, conventional procedural programming languages, such as the "C" programming language, Visual Basic, Fortran 2003, Perl, COBOL 2002, PHP, ABAP, LabVIEW, dynamic programming languages, such as Python, Ruby and Groovy, or other programming languages. The program code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider) or in a cloud computing environment or offered as a service such as a Software as a Service (SaaS).

Aspects of the present disclosure are described herein with reference to block diagrams of methods, apparatus (systems), and computer program products according to embodiments of the disclosure. It will be understood that each block of the block diagrams, and combinations of blocks in the block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable instruction execution apparatus, create a mechanism for implementing the functions/acts specified in the block diagram block or blocks.

These computer program instructions may also be stored in a computer readable medium that when executed can direct a computer, other programmable data processing apparatus, or other devices to function in a particular manner, such that the instructions when stored in the computer readable medium produce an article of manufacture including instructions which when executed, cause a computer to implement the function/act specified in the block diagram block or blocks. The computer program instructions may also be loaded onto a computer, other programmable instruction execution apparatus, or other devices to cause a series of operational steps to be performed on the computer, other programmable apparatuses or other devices to produce a computer implemented process such that the instructions which execute on the computer or other programmable apparatus provide processes for implementing the functions/acts specified in the block diagram block or blocks.

The block diagrams in the figures illustrate the architecture, functionality, and operation of possible implementations of systems, methods, and computer program products according to various aspects of the present disclosure. In this regard, each block in the block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams, and combinations of blocks in the block diagrams, can be implemented by special purpose hardware-based systems that perform the specified functions or acts, or combinations of special purpose hardware and computer instructions.

The terminology used herein is for the purpose of describing particular aspects only and is not intended to be limiting of the disclosure. As used herein, the singular forms "a", "an" and "the" are intended to include the plural forms as well, unless the context clearly indicates otherwise. It will be further understood that the terms "comprises" and/or "comprising," when used in this specification, specify the presence of stated features, integers, steps, operations, elements, and/or components, but do not preclude the presence or addition of one or more other features, integers, steps, operations, elements, components, and/or groups thereof. As used herein, the term "and/or" includes any and all combinations of one or more of the associated listed items. Like reference numbers signify like elements throughout the description of the figures.

Many alterations and modifications may be made by those having ordinary skill in the art, given the benefit of present disclosure, without departing from the spirit and scope of the invention. Therefore, it must be understood that the illustrated embodiments have been set forth only for the purposes of example, and that it should not be taken as limiting the invention as defined by the following claims. The following claims, therefore, are to be read to include not only the combination of elements which are literally set forth but all equivalent elements for performing substantially the same function in substantially the same way to obtain substantially the same result. The claims are thus to be understood to include what is specifically illustrated and described above, what is conceptually equivalent, and also what incorporates the essential idea of the invention.

## Claims

1. A device, comprising:
a wireless transmitter;
a controller; and
a remote control switch connector that is configured to connect the controller and the wireless transmitter to a power source for a transmit period responsive to a transition of a switch in a surge protective device indicating an end-of-life state of the surge protective device, the controller being configured to communicate an alarm code to a destination via the wireless transmitter during the transmit period.

2. The device of Claim 1, wherein the wireless transmitter is configured to communicate the alarm code to the destination via a wireless communication protocol.

3. The device of Claim 2, wherein the wireless communication protocol comprises a Lower Power Device 433 (LPD433) radio communication protocol, a cellular communication protocol, a Wi-Fi communication protocol, a Zigbee protocol, a Bluetooth communication protocol, and/or a Near Field Communication (NFC) communication protocol.

4. The device of any one of Claims 1 to 3, wherein the remote control switch connector is configured to disconnect the transmitter and the controller from the power source at an end of the transmit period.

5. The device of any one of Claims 1 to 4, wherein the power source is a battery.

6. The device of any one of Claims 1 to 5, further comprising:
a test switch that is configured to connect the controller and wireless transmitter to the power source responsive to operation of the test switch;
wherein the controller is further configured to perform a status check of the power source responsive to being connected to the power source due to operation of the test switch.

7. The device of Claim 6, wherein the controller is further configured to communicate the status of the power source to the destination via the wireless transmitter responsive to performing the status check of the power source.

8. The device of Claim 7, wherein the power source is a battery;
wherein the controller is further configured to communicate a battery OK code responsive to a determination that the battery has a voltage above a threshold level during the status check of the power source; and
wherein the controller is further configured to communicate a battery not OK code responsive to a determination that the battery has a voltage less than or equal to the threshold level during the status check of the power source.

9. The device of any one of Claims 6 to 8, further comprising:
a visual indicator that is configured to light responsive to operation of the test switch.

10. The device of Claim 9, wherein the visual indicator is a light emitting diode.

11. The device of any one of Claims 6 to 10, wherein the test switch is further configured for manual operation thereof.

12. The device of any one of Claims 1 to 11, further comprising:
a housing that encloses the wireless transmitter and the controller and is configured to connect to an assembly including the surge protective device.

13. A device, comprising:
a wireless receiver configured to receive an alarm code from a wireless transmitter indicating transition of a surge protective device to an end-of-life state; and
a controller connected to the wireless receiver and that is configured to activate an alarm circuit responsive to receipt of the alarm code via the wireless receiver.

14. The device of Claim 13, wherein the alarm circuit is an audible alarm circuit and/or a visual alarm circuit.

15. The device of any one of Claims 13 or 14, further comprising:
a remote control switch; and
a remote control connector connected to the remote control switch;
wherein the controller is configured to communicate an alarm notification to an external entity via the remote control switch and remote control connector responsive to wireless receiver receiving the alarm code.

16. The device of Claim 15, wherein the wireless receiver is further configured to receive a status of a power source connected to the wireless transmitter; and
wherein the controller is configured to activate the alarm circuit and/or to generate the alarm notification to indicate the status of the power source.

17. The device of Claim 16, wherein the power source is a battery;
wherein the wireless receiver is further configured to receive a battery OK code as the status of the power source when the battery has a voltage above a threshold level; and
wherein the wireless receiver is further configured to receive a battery not OK code as the status of the power source when the battery has a voltage less than or equal to the threshold level.

18. The device of Claim 17, wherein the controller is configured to activate the alarm circuit and/or generate the alarm notification to indicate a normal operation state responsive to receiving the battery OK code and is configured to activate the alarm circuit and/or generate the alarm notification to indicate an error state responsive to receiving the battery not OK code.

19. The device of any one of Claims 16 to 18, further comprising:
a reset switch that is configured to reset the alarm circuit and/or the alarm notification responsive to operation thereof.

20. The device of any one of Claims 13 to 19, wherein the wireless receiver is configured to communicate with the wireless transmitter via a wireless communication protocol.

21. The device of Claim 20, wherein the wireless communication protocol comprises a Lower Power Device 433 (LPD433) radio communication protocol, a cellular communication protocol, a Wi-Fi communication protocol, a Zigbee protocol, a Bluetooth communication protocol, and/or a Near Field Communication (NFC) communication protocol.

22. The device of any one of Claims 13 to 21, wherein the wireless receiver is further configured to receive a plurality of alarm codes from a plurality of wireless transmitters indicating transitions of a plurality of surge protective devices to end-of-life states, respectively.

23. A device, comprising:
a wireless transmitter;
a controller; and
a remote control switch connector that is configured to connect the controller and the wireless transmitter to a power source for a transmit period responsive to a transition of a switch in a surge protective device indicating a surge event, the controller being configured to communicate an alarm code to a destination via the wireless transmitter during the transmit period.
